# EUROPEAN PATENT SPECIFICATION

(11) **EP 4 451 305 B1**
(45) Date of publication and mention of the grant of the patent: **27.08.2025**
(21) Application number: 24000039.8
(22) Date of filing: 28.03.2024
(51) Int. Cl.: H01H 27/00, F16P 3/08

(54) **SAFETY SWITCH FOR GUARDING ACCESSES TO MACHINES OR INDUSTRIAL PLANTS AND RELATED ASSEMBLY**
SICHERHEITSSCHALTER ZUM SCHUTZ VON ZUGRIFFEN AUF MASCHINEN ODER INDUSTRIEANLAGEN UND ZUGEHÖRIGE MONTAGE
COMMUTATEUR DE SÉCURITÉ POUR PROTÉGER DES ACCÉS À DES MACHINES OU DES INSTALLATIONS INDUSTRIELLES ET À UN ENSEMBLE ASSOCIÉ

(30) Priority: 18.04.2023 IT 202300007563
(43) Date of publication of application: 23.10.2024
(73) Proprietor: Pizzato Elettrica S.r.l., 36063 Marostica (Vicenza) (IT)
(72) Inventor: Pizzato, Marco, 36063 Marostica (VI) (IT); Zonta, Simone, 36061 Bassano del Grappa (VI) (IT)
(74) Representative: Dalla Rosa, Silvia

(56) References cited:
- WO-A1-2015/083143
- WO-A1-2022/185266
- US-A1- 2019 316 381
- US-B2- 10 892 123

## Description

### Technical Field

The present invention finds application in the filed electrical devices for industrial use, in particular for the control of industrial machines and plants, and particularly relates with a safety switch suitable, for example, for the protection of access to safety perimeters or areas for industrial machines or plants.

The invention also relates with a safety assembly for guarding accesses which comprises the above safety switch and an actuating device suitable to cooperate therewith upon the opening/closing of the access and the locking/unlocking thereof.

### State of the art

As known, safety assemblies for the control of industrial machines and systems generally comprise a first switching device having the function of a safety switch for switching the power and/or service circuits of the machine or plant, or of parts thereof, suitable to cooperate with a second device having a driving function and which interacts with the first device to generate a command for switching the above circuits. For safety assemblies designed to guarding accesses to safety perimeters or working areas of industrial machines or plants, the safety switch is usually applied to a fixed part of the protection close to the access.

Instead, the actuating device is generally applied directly to the movable part of the access, so that the interaction with the switching device occurs when the access is closed, according to operating schemes that may vary according to multiple schemes. A particular type of such assemblies is represented by electronically operated assemblies, wherein the switching device or safety switch is provided with a first communication element, usually an antenna, suitable of communicating with a second communication element, such as a transponder, associated with the movable element, for example the actuating device or an element of the machine to be detected, to receive a coded presence signal suitable for indicating the proximity of the movable element. Generally speaking, safety switches comprise a main module provided with a case which houses thereinside both the mechanical or electronic switching elements, with the relative connection terminals of the circuits to be controlled, and, for safety switches for guarding accesses, also a mechanism for locking the actuating device, i.e. a mechanism suitable for engaging the actuating device to prevent the unsafe opening of the access.

The safety switch is completed by one or more auxiliary modules, among which there is generally a head designed to allow interaction between the actuating device and its locking mechanism.

With electronically operated switches, the head may also house the antenna or other appropriately provided remote communication element.

Inside the case there is usually a PCB (Printed Circuit Board) on which two safety CPUs are typically applied for controlling the switching elements and the various electronic circuits necessary for the management of the signals and commands transmitted or received from other devices of the plant or machine in which the switch is located.

In known solutions, the PCB, together with the several circuit components, is arranged entirely inside a space defined by the case and arranged adjacent, typically below, to the switch head.

Although this configuration is very widespread in the field, it necessarily implies that the overall longitudinal size of the safety switch is at least equal to the longitudinal size of the PCB, plus the longitudinal size of the head.

Moreover, this overall longitudinal size has also to consider the screws, or other equivalent elements, for fixing the head to the case, which pass through the head in the longitudinal direction of the switch and enter the case.

These elements represent limits for the miniaturization of the safety switches which, to date, typically have a longitudinal dimension of no less than approximately 15 cm. This condition is particularly problematic in those industrial machines wherein a safety switch that is too bulky could interfere with the correct closing of the access, making the machine potentially dangerous for the operator.

Furthermore, in some cases it is necessary to connect the PCB through appropriate wiring to the various electrical and/or electronic devices present in the switch, such as the above cited communication elements, or lights or other luminous and/or acoustic signaling devices, which may be located on the case or even on the head, as for the switch described in WO2022185266.

However, when the electrical and/or electronic components are housed in the head, their connection to the PCB requires that the wiring extends from the case to the head, i.e. between two modules which are generally distinct from each other, at least during assembly of the complete device, and which can also be orientable with respect to each other according to different configurations, for example by relative rotation of the head with respect to the longitudinal axis of the case.

This results in greater complexity of the wiring and greater difficulty in assembly.

A further drawback, for devices electronically operated wherein there is interaction between an antenna placed in the head with the transponder of the actuating device, is represented by the need to provide multiple antennas, for example three antennas, in order to guarantee correct communication between the switching device and the actuating device whatever the position of the head with respect to the case, i.e. even following the rotation of the first with respect to the second.

This configuration inevitably also involves the use of solutions that are bulkier and therefore more difficult to install due to the need to have sufficiently large anchoring spaces.

US2019316381 discloses a safety switch for guarding access having all the features contained in the preamble of the present claim 1.

### Scope of the invention

The object of the present invention is to overcome the above drawbacks by providing a safety switch for guarding accesses to industrial machines or plants which has features of high efficiency and relative cost-effectiveness.

A particular object is to provide a safety switch for guarding accesses to industrial machines or plants which allows the entire electronics, or even part of it, to be inserted easily inside the head both during production and assembly and which does not require complex wiring, to also guarantee increased reliability.

Yet another particular object is to provide a safety switch for guarding accesses to industrial machines or plants, in particular of the electronically operated type, which uses a reduced number of components, while at the same time guaranteeing the necessary functionality and configurability of the device.

Yet another particular object is to provide a safety switch for controlling access to industrial machines or plants which is particularly compact and has a reduced overall longitudinal size compared to known solutions.

These objects, as well as others that will become more apparent hereinafter, are achieved by a safety device for guarding accesses to industrial machines or plants which, according to claim 1, comprise a case extending along a main dimension defining a longitudinal development axis, control means housed in said case and suitable for receiving and exchanging signals with the actuating device and/or with the machine or plant and provided with a first PCB, a head connected to said case and adapted to interact with the actuating device upon the opening/closing of the access and wherein said first PCB comprises a first portion housed in said case and a second portion housed in said head.

In this way, the connection between the electrical and/or electronic components housed in the head, such as an RFID antenna, LED signaling lights or other detection and signaling means appropriately designed according to needs, with control devices located on the PCB, such as, again by way of example, CPUs or switching means, will be significantly simplified.

Preferably but not exclusively, the head may comprise a connection portion to said case having a seat for housing said second portion of said first PCB and L-shaped with a longitudinal arm extending from the upper face of the case and a transverse arm cantilevered from said longitudinal arm.

Furthermore, there will be detection and signaling means connected to said control means and suitable for detecting the presence of the actuating device and signaling the condition of the access.

In particular, said detection and signaling means may comprise a first remote communication element, such as an antenna, housed in said transversal arm and suitable for detecting the presence of an electronic actuator device through the exchange of a signal presence with a second communication device associated with the actuating device.

This particular configuration will allow to insert a single antenna, or equivalent communication element, inside the head, which can be placed in a substantially central position and which will always be aligned axially with the communication element of the actuating device, once the actuating pin will be inserted into the head, according to known methods which will be described more clearly later.

Advantageous embodiments of the invention are obtained in accordance with the dependent claims.

### Brief disclosure of the drawings

Further features and advantages of the invention will become more apparent in light of the detailed description of preferred but not exclusive embodiments of the safety switch and of an assembly comprising such a switch, shown by way of non-limiting example with the aid of the attached drawing tables wherein:
**FIG. 1** is an exploded and simplified side view of the switch;
**FIG. 2** is a front view of the assembled switch of Fig. 1;
**FIG. 3** is a perspective view of the assembly equipped with the switch according to the invention and with the actuating device not inserted;
**FIG. 4** is an assembled perspective view of the switch of Fig. 3;
**FIG. 5** is an exploded perspective view of the switch of Fig. 4;
**FIG. 6** is a front view of the switch of Fig. 4;
**FIG. 7** is a front-rear view of the switch of Fig. 4;
**FIG. 8** is a side sectional view of the switch of Fig. 3;
**FIG. 9** is a sectional view of the switch of Fig. 3 according to the A-A trace plane of Fig. 8;
**FIG. 10** is a sectional view of the switch of Fig. 3 according to the B-B of Fig. 8;
**FIG. 11** is a perspective view of a detail of the switch of Fig. 3 which shows the case and the head without the upper element in an unassembled condition;
**FIG. 12** is a side sectional view of the detail of Fig. 11 in the unassembled condition;
**FIG. 13** is an enlarged and sectional view of a detail of the switch;
**FIG. 14** is a front view of an element of the detail of Fig. 11;
**FIG. 15** is a rear view of the element of Fig. 14;
**FIG. 16** is a sectional side view of the assembly of Fig. 3 wherein the actuating device is inserted into the switch.

### Best modes of carrying out the invention

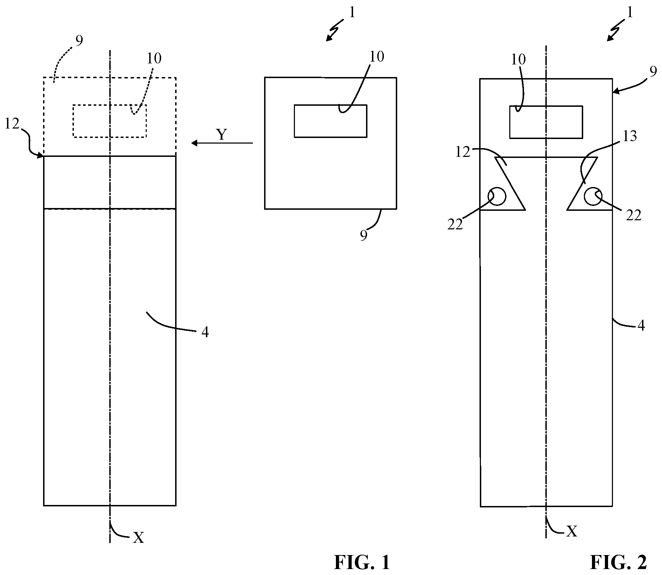

**Figs. 1** and **2** schematically illustrate a simplified embodiment of a safety switch, globally referred as **1,** for guarding accesses to industrial machines and plants.

In particular, the shown switch is of the type designed to be anchored to a fixed or movable part of a perimeter, panel or safety barrier close to an access to a working area wherein an industrial machine or plant is located, to monitor this access.

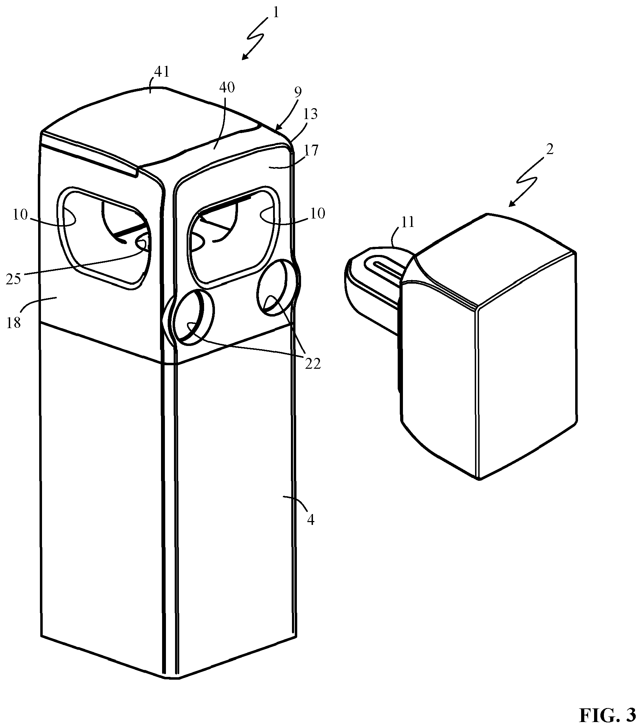

In a known manner, the safety switch **1** is designed to be mounted close to the access to be monitored to interact with an actuating device, an example of which is illustrated in **Fig. 3** and globally referred as **2,** upon the opening/closing or the unlocking of the access, as described in more detail below.

For example, the safety switch **1** may be anchored to the fixed part of an access, such as the frame of a door, while the actuating device **2** may be anchored to the movable part of the access, or vice versa.

In its most essential configuration, the safety switch **1** comprises a case **4** housing switching means adapted to be connected to control means of the machine or plant, such as one or more power and/or service circuits and/or to control devices of the machine, such as safety modules or safety PLCs, depending on the type of switching means adopted.

The switching means may be designed to signal the status of the access guarded by the safety switch **1** and, for example, may signal whether the access is open or closed or closed and locked.

The switching means, not shown in the figures as known per se, may generally comprise one or more pairs of mutually movable contacts suitable for opening and closing respective circuits upon the reception of specific commands and/or signals, according to known schemes not described here as they do not represent a limitation for the present invention.

Alternatively, or in addition, the switching means may be of the electronic OSSD (Output Signal Switching Device) type and comprise semiconductor devices or one or more transistors, to be connected to the above safety modules or PLCs.

It is understood that the technical properties of the switching means do not represent a limiting aspect for the present invention.

The case **4** develops along a main dimension defining a longitudinal axis of development **L** and also houses inside it a locking/unlocking mechanism **5,** described in more detail below but whose configuration is not to be understood as limiting the present invention.

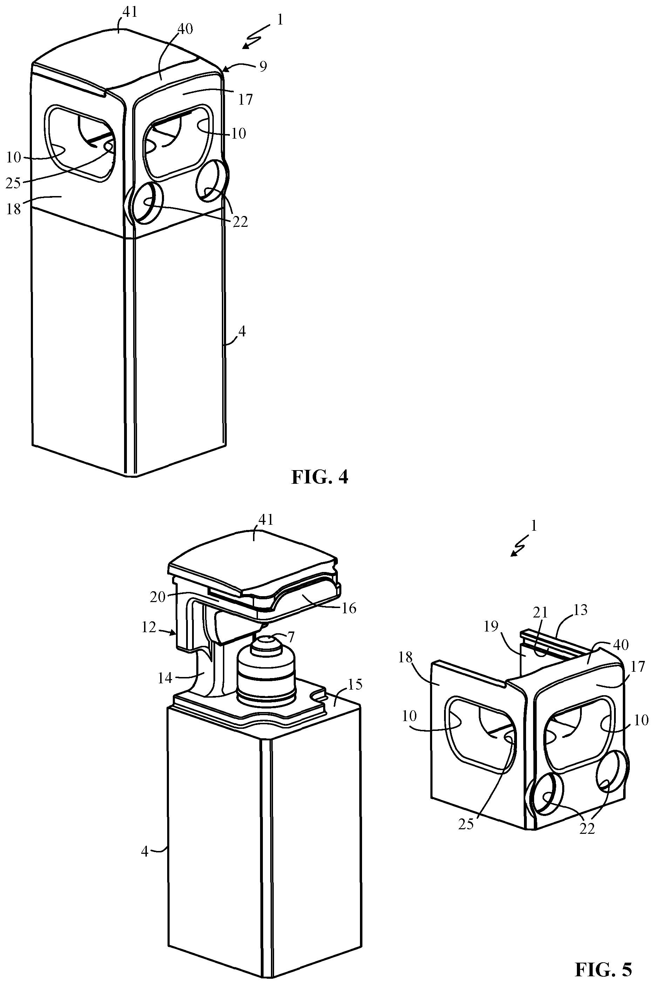

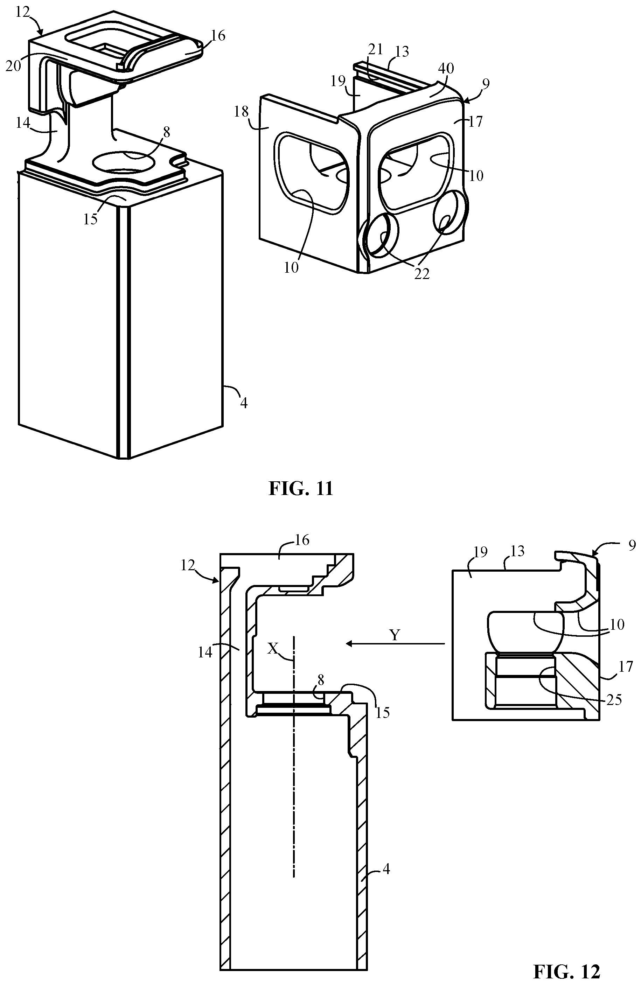

In particular, the main task of the locking/unlocking mechanism **5** will be to lock the actuating device **2** with respect to the safety switch **1** and for this purpose it may be provided with a locking/unlocking pin **6** movable in the case **4** along a longitudinal direction **X** to protrude at least partially with one of its ends **7** outside the case **4,** as visible in **Fig. 5****,** through an upper passage **8** made in the case **4** and visible in **Fig. 11****.** The safety switch **1** is then provided with a head **9** fixed on the case **4** and which is designed to allow the interaction of the locking/unlocking pin **6** with the actuating device **2.**

In particular, the head **9** may be provided with one or more slots **10** suitable to allow the interaction of the locking/unlocking pin **6** with an actuator pin **11** protruding from the actuating device **2.**

In particular, the slots **10** will allow the actuator pin **11** to enter at least partially into the head **9** to be blocked with respect to the safety switch **1** following the retention action of the locking/unlocking pin **6.**

In particular, the slots **10** will define respective insertion directions **Z** of the actuator pin **11** inside the head **9.**

The actuator pin **11** may have a retention and centering function or even may operate as actuator, depending on the type of actuating device.

However, it will also be possible to have solutions wherein the head **9** is free of slots or similar elements, for example if the actuating device **2** is not provided with an actuator pin or other mechanical or electromechanical actuator, as for example in some switch solutions with totally electronic actuator like the one described in WO2015/155744, in the name of the same Applicant.

In these cases the safety switch **1** may also be devoid of the locking/unlocking mechanism **5.**

Optionally, the safety switch **1** may be implemented with further auxiliary modules, such as, for example, modules provided with emergency controls, manual release, connection modules, even of different types to allow connection with different types of cables, or other types of modules according to typical configurations for this type of product.

According to the embodiments of the figures, which are illustrative and non-limiting for the present invention, the head **9** and the case **4** are mutually coupled by respective mutual coupling means suitable to allow their mutual stable fixing by mutual sliding along at least one sliding direction **Y** transversal to the longitudinal direction **X.**

However, it is understood that the methods of coupling between the case **4** and the head **9** may also be of a different type from those illustrated, or the case **4** and the head **9** may be monolithic with each other.

Generally speaking, in the illustrated embodiments, the mutual coupling means will comprise a first coupling element **12** integral with the case **4** and a second coupling element **13** integral with the head **9.**

Furthermore, the two coupling elements **12, 13** comprise mutually counter-shaped coupling portions to allow their coupling by sliding along the sliding direction **Y.**

In the example of **Figs. 1** and **2** the two coupling elements **12, 13** are shaped to define a dovetail coupling.

Preferably, the sliding direction **Y** will be orthogonal to the longitudinal direction **X,** as schematized in **Fig. 1****.**

Even more preferably, the sliding direction **Y** corresponds or is parallel with one of the insertion directions **Z** defined, in use, by the slots **10** and along which the actuator pin **11** moves inside the head **9.**

In the preferred configuration of the figures, as more clearly visible in **Fig. 5****,** the mutual coupling means comprise a retaining body **12** integral with the case **4** and which will define the first coupling element.

Instead, the head **9** will be provided with a removable portion **13** defining the second coupling element and which will be adapted to be coupled to the retaining body **12** by transversal sliding along the sliding direction **Y.**

The retaining body **12** will be suitably shaped to define a constraint for the removable portion **13** of the head **9** with respect to the case **4** at least along the longitudinal direction **X,** in both directions therealong.

In other words, the retaining body **12** limits, or more preferably blocks, the mutual sliding between head **9** and case **4** along the longitudinal direction **X** in both directions. Even more preferably, the retaining body **12** will be suitably shaped to define a constraint for the head **9** with respect to the case **4** also along the sliding direction **Y,** limiting, or more preferably blocking, the mutual sliding between the head **9** and the case **4** along the sliding direction **Y,** in at least one direction.

Even more preferably, the retaining body **12** will be suitably shaped to define a constraint for the head **9** with respect to the housing **4** also along a direction perpendicular to the longitudinal direction **X** and to the sliding direction **Y.**

In the preferred embodiments, the retaining body **12** will be suitably L-shaped, i.e. with a longitudinal arm **14** extending from the upper face **15** of the case **4,** or the one provided with the upper passage **8** for the locking/unlocking pin **6,** and a transverse arm **16** cantilevered from the upper end of the longitudinal arm **14.**

In the preferred embodiments, the transverse arm **16** extends at a level, with respect to the longitudinal direction **X,** located close to the level of the upper end **40** of the removable portion **13.** More specifically, the transverse arm **16** covers, completely or partially, or is coplanar with the upper end **40** of the removable portion **13.** In this way the removable portion **13** is predominantly interposed between the upper face **15** of the case **4** and the transverse arm **16** which, therefore, prevent the movement of the removable portion **13** along the longitudinal direction **X.**

In turn, the removable portion **13** of the head **9** will be shaped to surround the retaining body **12** on at least three sides and define with it a head **9** with a substantially prismatic shape, for example approximately in the shape of a cube or parallelepiped as in the figures.

In particular, the removable portion **13** will have a front face **17** and a pair of side faces **18, 19,** on at least one, preferably at least two, of which a slot **10** will be provided for the insertion of the actuator pin **11** of the actuating device **2.**

The retaining body **12** and the removable portion **13** comprise respective coupling portions with conjugated shape designed to define a shaped coupling therebetween. The transverse arm **16** will be provided with transversal sliding guides **20** adapted to slidably engage respective transversal sliding counter-guides **21** made on each of the two side faces **18, 19.**

It is understood that the sliding coupling between the removable portion **13** and the retaining body **12** may also be obtained with different coupling systems, for example with joints or other couplings of the male and female type, without particular limitations.

The head **9** will also be shaped to allow the insertion and consequent longitudinal movement within it of the protruding end **7** of the locking/unlocking pin **6,** to allow its interaction with the actuator pin **11.**

According to a further particularly advantageous aspect, in a preferred but not exclusive configuration, the retaining body **12** will be monolithic with the case **4** and possibly made of one piece with the same and in the same material.

By way of example, the retaining body **12** and the case **4** may be obtained by means of a single mechanical processing operation, such as moulding.

Optionally, it will be possible to make the case **4** and the retention body **12** in plastic material, while the removable portion **13** of the head **9** may be made of metallic material to guarantee adequate resistance to interactions with the actuating device **2** and to efficiently withstand the stresses transmitted both by the actuating device **2** and by the constraint produced by the anchoring means to the fixed frame of the protection or to another fixed or movable part of the access.

This conformation will make the safety switch **1** light and economical but at the same time resistant.

In particular, the above firm anchoring means of the safety switch **1** may be associated exclusively with the head **9,** and even more preferably only with the removable portion **13.**

For example, the anchoring means will comprise one or more anchoring through holes **22,** for example a pair of anchoring through holes **22,** which extend parallel to each other along a direction transverse to the longitudinal direction **X.**

Preferably, the anchoring through holes **22** will extend along a direction parallel to the sliding direction **Y** or orthogonal to this and also to the longitudinal direction **X.**

The anchoring through holes **22** will be made in at least one between the front face **17** and the side faces **18, 19** of the removable portion **13** of the head **9,** for example on the front face **17** as in the figures, and laterally to the longitudinal arm **14.**

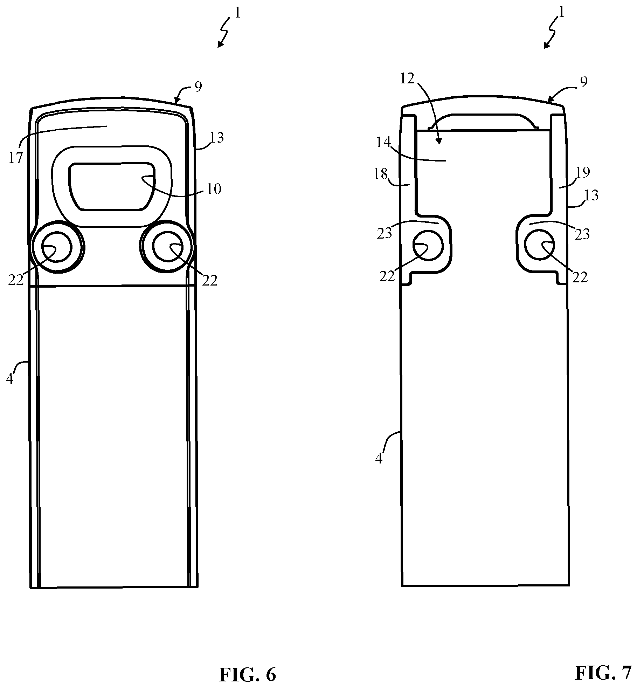

As visible from **Fig. 7****,** the removable portion **13** will also be provided with a pair of rear appendages **23** which will be arranged, upon complete assembly, in a coplanar position with the longitudinal arm **14** and which will have respective outlets of the anchoring through holes **22.**

This particular embodiment of the anchoring means will allow the head **9** to be firmly locked with respect to the case **4** at the same time as the entire safety switch **1** is fixed to the access, without using further fixing means between the head **9** and the case **4.**

So, the coupling between the head **9** and the case **4** may be of a completely removable type, obviously in the event that the safety switch **1** is not fixed in position by the anchoring means.

Alternatively, the mutual coupling means may also comprise constraint elements suitable for making the coupling between head **9** and case **4** completely blocked or only partially modifiable.

For example, the constraint means may be designed to only partially block the coupling between head **9** and case **4** and make the head **9** orientable with respect to the case **4,** while still constraining the former with respect to the latter along the transverse direction **Y.**

Preferably, the constraint means may be designed to completely block the movement of the head **9** with respect to the case **4** or to limit it to a predetermined maximum stroke, avoiding complete detachment.

This configuration will have the purpose of preventing the end user from dismantling the safety switch **1.**

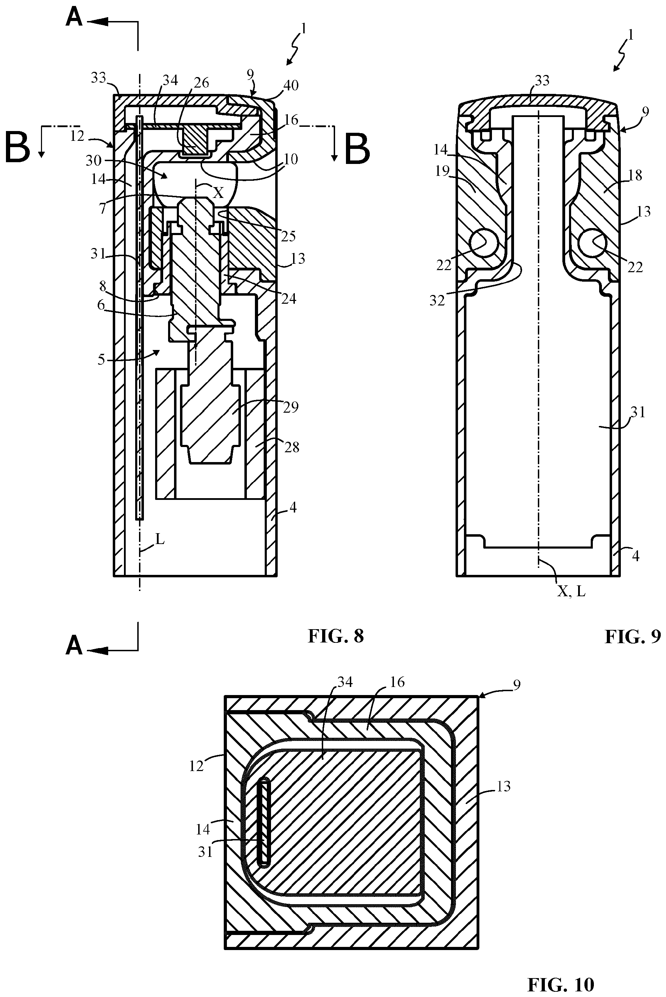

In a preferred configuration, shown in **Fig. 8****,** the constraint means comprise an anchoring bush **24** coaxial to the locking/unlocking pin **6** and which will be inserted into the longitudinal passage **25** of the removable portion **13.** The anchoring bush **24** is suitable to define a constraint along the transverse direction **Y** between the removable portion **13** and the case **4.**

According to a first variant, the safety switch 1 may be of the electronically operated type and, in this case, it will be designed to communicate with the actuating device **2** through the exchange of an electromagnetic presence proximity signal, preferably of a coded type, as described more clearly below.

From the same **Fig. 8** it can also be observed that the safety switch **1** will also be provided with a first PCB (Printed Circuit Board) **31** housed in the case **4** and associated with a control unit suitable of controlling the switching means, receiving and exchange signals with the actuating device **2** and/or with the machine or plant.

Preferably, on the first PCB **31** there may be both the control unit, for example comprising one or more CPUs (Central Processing Unit) and the switching means, preferably of the OSSD type.

Even more preferably, the control unit comprises two CPUs configured to communicate with each other in a redundant manner and the switching means comprises two safe outputs, each of which is controlled by a respective of said two CPUs of the control unit.

The first PCB **31** may also comprise electrical and electronic circuits for communication of the control unit with external command and control systems, such as for example safe communication BUS (Profisafe, IOlink safety, CIP Safety and similar) and not safe (Profinet, IOlink, EthrNet/IP, Profinet and similar) and for the management of the various components, including any LED lights or other signaling elements.

According to the invention, the first PCB **31** will extend longitudinally inside the case **4** and also inside the head **9.**

In particular, the first PCB **31** comprises a first longitudinal portion housed inside the case **4** and a second longitudinal portion housed inside the head **9.**

Preferably, the two longitudinal portions of the first PCB **31** will be integral and in physical continuity with each other.

To this end, the upper face **15** of the case **4** will be provided with at least one opening or slot **32** for the passage of the first PCB **31** inside the head **9.**

In this way, the first PCB **31** will be contained in a development plane parallel to the longitudinal axis of development **L** of the case **4** and, furthermore, it will extend in a lying plane intersected by a plane perpendicular to the longitudinal axis **X** and containing insertion directions **Z** defined by the slots **10.**

This configuration will allow to have a safety switch **1** with a particularly compact structure and reduced overall height compared to similar solutions.

In turn, the head **9** may also house detection and signaling means connected to the control means and suitable to detect the presence of the actuating device **2** and signaling the opening/closing/unlocking status of the access.

By way of example, the detection and signaling means may first of all comprise a first communication element **26** of the receiving or transmitting type, suitable for communicating with a second communication element **27** of the transmitting or receiving type associated with the actuating device **2.**

Generally, the receiving element will be an RFID (Radio Frequency Identification) type antenna or reader configured to communicate with the transmitting element, which may instead be a transponder, when the latter is at the minimum detectable distance from the antenna or reader.

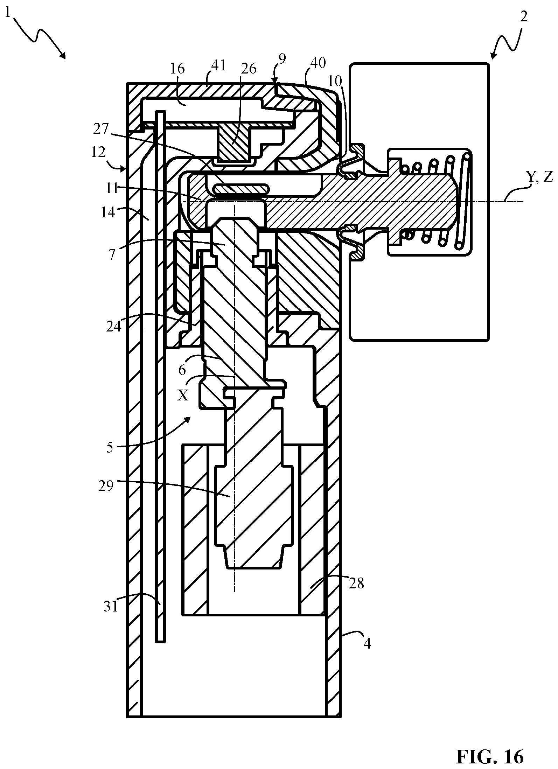

In the example of **Fig. 16****,** the first communication element **26** is a receiving element, for example of the RFID type, and the second communication element **27** is a transmitting element, such as a transponder.

In particular, the RFID type receiving element will emit a signal capable of exciting the transponder, which is in turn equipped with an RFID tag with identification code, which in turn will emit a response signal which will be received by the receiving element and which has to be recognized by the control means of the safety assembly, appropriately equipped with a CPU, to allow the machine or plant to be started.

Advantageously, the first communication element **26,** preferably an RFID type antenna, will be housed in the transverse arm **16** to detect the presence of an electronic actuating device **2** by exchanging a proximity signal with the second communication device **27,** preferably a transponder, associated with the actuating device **2.**

More precisely, in the illustrated configuration, the second longitudinal portion of the first PCB **31** will be placed in the longitudinal arm **14** of the retaining body **12,** to connect directly to the first communication element **26** housed in the transverse arm **16.**

The detection and signaling means housed in the transverse arm **16** also comprise one or more signaling lights or indicators, generally of the LED type, not shown, connected to the control unit and whose color and/or frequency may vary based on the operative condition of the access and/or circuits of the machine or plant to which they are connected.

Advantageously, the head **9** may also be provided with an upper portion or cap **33.** In this case, the transverse arm **16** comprises a cap **33** made of a transparent or translucent material and which encloses therewithin at least part of the detection and signaling means, i.e. the above lights or indicator or other sources of light signals, which will thus be visible, at least in the ON condition, through the cap **33.**

According to the exemplifying but not limiting embodiment of the figures, the cap **33,** which will also have the function of a lens, will preferably be applied to the upper face of the head **9,** substantially along its whole development surface, in a fixed or removable manner, for example if desired intervene on the warning lights.

The positioning of the cap **33** on the upper face of the head **9** will allow the visibility of the warning lights even if the operator is not positioned frontally with respect to the switch **1.**

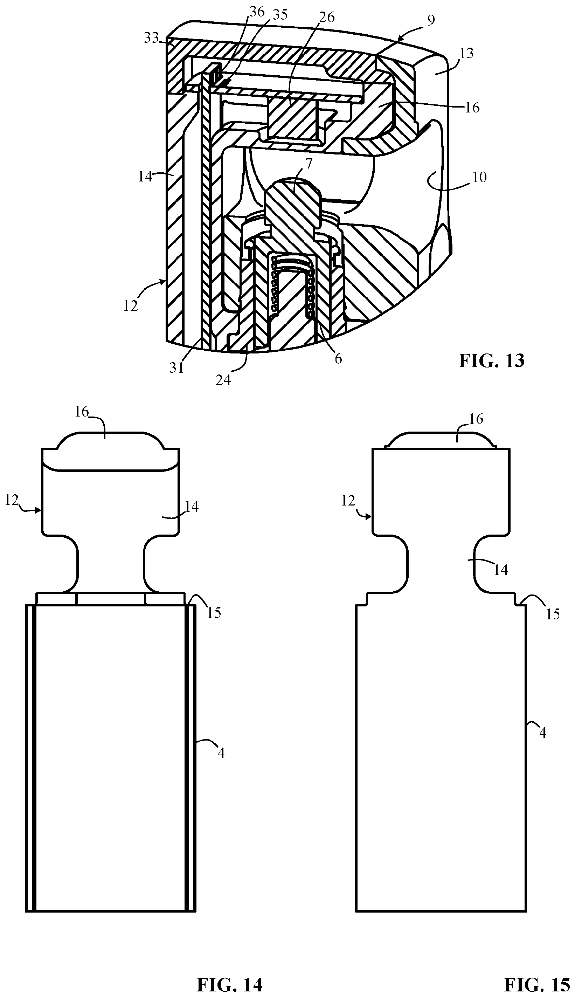

As more clearly visible from **Figs. 10** and **13****,** the transverse arm **16** of the retaining body **12** houses a second PCB **34** which supports the detection and signaling means, i.e. the part of these means housed in the head **9.**

Preferably, the second PCB **34** will be connected to the second longitudinal portion of the first PCB **31** and will be provided with one or more electrical connection tracks **35** connected to corresponding electrical connection tracks **36** of the first PCB **31** for the electrical connection between the detection and signaling means and the control unit. Preferably, the connection tracks **36** of the first PCB **31** may be welded to the connection tracks **35** of the second PCB **34.**

However, it will also be possible to provide alternative embodiments wherein the electrical continuity between the connection tracks **35, 36** may be obtained by means of electrical connectors of any kind.

Always in **Fig. 13****,** it can also be observed that the first communication element **26,** hereinafter also antenna **26,** extends from the second PCB **34,** below it, in such a position as to be aligned with the locking/unlocking pin **6.**

**Fig. 16** shows an electronically operated safety assembly wherein the safety switch **1** is provided with the antenna **26** and the actuating device **2** is provided with the transponder **27.**

In particular, the transponder **27** may be provided with an RFID tag with an identification code which will be received by the antenna **26** and which must be recognized by the control unit in order to allow the machine or plant to be started.

Code recognition may be unique or generic, depending on whether you want to create a safety switch with a high or low coding level.

Advantageously, the RFID tag will be coded so that it can be uniquely recognized by the antenna **26,** preventing the use of actuating devices other than the one connected to the access, avoiding the risk of unsafe opening of the access.

Optionally, the recognition of the RFID tag by the antenna **26** will allow the activation of the locking/unlocking mechanism **5.**

From the same section it is also possible to observe a possible embodiment of the locking/unlocking mechanism **5,** provided with an electromagnet **28** suitable to be energized/deactivated to promote the longitudinal translation, in one or the other sense, of a pusher **29** connected mechanically to the locking/unlocking pin **6.**

Consequently, the locking/unlocking pin **6** will move along the longitudinal direction **X,** according to known methods in the sector and therefore not described in greater detail.

Briefly, upon the energization or de-energization of the electromagnet **28,** the locking/unlocking pin **6** may translate in a first sense along the longitudinal direction **X** so that its upper end **7** fits into the seat **30** of the head **9** designed to house the actuator pin **11,** blocking the latter with respect to the head **9,** or it may translate in the opposite sense, always along the longitudinal direction **X,** to remove the upper end **7** from the seat **30,** so as to allow the extraction of the actuator pin **11** and the unlocking of the access.

The electromagnet **28** may be replaced in a completely equivalent manner by another electromechanical, electric, hydraulic or pneumatic actuating means housed in the case **4.**

The first communication element **26** may be housed inside the transverse arm **16** of the retaining body **12,** so as to face the protruding end 7 of the locking/unlocking pin **6** and detecting the presence of the second communication element **27** when inserted in the seat **30** of the head **9.**

Conveniently, the second communication element **27** will instead be inserted into the actuator pin **11** which fits into the seat **30** of the head **9.**

It has to be understood that the communication elements **26, 27** may also be of another type, for example magnetic or electromagnetic, optical, mechanical, inductive, pressure operated or other types.

According to a not shown variant, the safety switch may be of the electromechanically operated type and interact with an actuation device equipped with a key actuator in place of the retention and centering pin, according to known methods described for example in EP0871188.

The safety switch **1** according to the present invention will be suitable for use within a safety system for the control of a plant machine and which comprises one or more safety switches associated with respective accesses to be guarded, not necessarily identical between them nor all of them in accordance with the present invention, and suitable for interacting with respective actuating devices. The system will then comprise one or more safety modules or PLCs designed to manage the power supply of the machine or system based on the signals exchanged with the switch.

## Claims

1. A safety switch for guarding accesses to industrial machines or plants suitable for being mounted close to an access to interact with an actuating device **(2)** at the opening/closing of the access, which safety switch comprises:
- a case **(4)** which extends along a main dimension defining a longitudinal axis of development **(L);**
- control means housed in said case **(4)** and adapted to receive and exchange signals with the actuating device **(2)** and/or with the machine or plant and provided with a first PCB **(31);**
- a head **(9)** connected to said case **(4)** and adapted to interact with the actuating device **(2)** upon the opening/closing of the access;
**characterized in that** said first PCB **(31)** comprises a first longitudinal portion housed in said case **(4)** and a second longitudinal portion housed in said head **(9).**

2. Safety switch as claimed in claim 1, **characterized in that** said first longitudinal portion and said second longitudinal portion of said first PCB **(31)** are integral and in physical continuity with each other.

3. Safety switch as claimed in claim 1 or 2, **characterized in that** said head **(9)** comprises a coupling element **(12)** for its connection with said case **(4),** said coupling element **(12)** being integral with the upper face **(15)** of said case **(4)** and shaped to house said second portion of said first PCB **(31),** said upper face **(15)** of said case **(4)** being provided with at least one opening or slot **(32)** for the passage of said first PCB **(31)** in said head **(9).**

4. Safety switch as claimed in claim 3 or 4, **characterized in that** said coupling element **(12)** is L-shaped with a longitudinal arm **(14)** extending from said upper face **(15)** of said case **(4)** at said opening or slot **(32)** and a transverse arm **(16)** cantilevered from said longitudinal arm **(14).**

5. Safety switch as claimed in claim 4, **characterized in that** said first PCB **(31)** extends in said case **(4)** parallel to said longitudinal axis of development **(L).**

6. Safety switch as claimed in any preceding claim, **characterized by** comprising detection and signaling means connected to said control means and suitable for detecting the presence of the actuator device **(2)** and for signalling the status of the access and/or of the machine or plant.

7. Safety switch as claimed in claims 4 or 5 when combined also with claim 6, **characterized in that** said detection and signaling means comprise a first remote conununication element **(26)** housed in said transverse arm **(16)** and adapted to detect the presence of an actuating device **(2)** of the electronic type by exchanging a proximity signal with a second communication element **(27)** associated with the actuating device **(2).**

8. Safety switch as claimed in claim 7, **characterized in that** said first communication element **(26)** is an antenna adapted to detect RFID signals.

9. Safety switch as claimed in any claim from 6 to 8, **characterized in that** the detection and signaling means housed in said transverse arm **(16)** comprise one or more signaling lights or indicators.

10. Safety switch as claimed in any claim from 6 to 9, **characterized in that** said transverse arm **(16)** of said head **(9)** houses a second PCB **(34)** which supports at least part of said detection and signaling means.

11. Safety switch as claimed in claim 10, **characterized in that** said second PCB **(34)** is provided with one or more electrical connection tracks **(35)** connected to corresponding electrical connection tracks **(36)** of said first PCB **(31)** for the connection between said detection and signaling means and said control means.

12. Safety switch as claimed in claim 10 or 11, **characterized in that** said second PCB **(34)** is fastened to said second longitudinal portion of said first PCB **(31),**

13. Safety switch as claimed in any claim from 5 to 13, **characterized in that** said head **(9)** comprises a removable portion **(13)** having coupling means for coupling with said coupling element **(12).**

14. Safety switch as claimed in any preceding claim, adapted to interact with an actuating device **(2)** provided with an actuator pin **(11), characterized in that** said case **(4)** houses a locking/unlocking mechanism **(5)** for locking/unlocking the actuator device **(2)** and provided with a locking/unlocking pin **(6)** movable along a longitudinal direction **(X)** to protrude at least partially with one end **(7)** from said case **(4)** inside said head **(9) ,** the latter having one or more slots **(10)** suitable for allowing the insertion of the actuator pin **(11)** thereinside.

15. Safety switch as claimed in claims 13 and 14, **characterized in that** said one or more slots **(10)** are made on said removable portion **(13)** of said head **(9).**

16. Safety switch as claimed in claim 14 or 15, **characterized in that** said one or more slots **(10)** define respective insertion directions **(Z)** of the actuator pin **(11)** inside said head **(9),** said first PCB **(31)** being intersected by a plane perpendicular to said longitudinal axis of development **(L)** and containing said insertion directions **(Z).**

17. A safety assembly for controlling accesses to industrial machines or plants, comprising a safety switch **(1)** according to one or more of the preceding claims adapted to be anchored to one between a fixed part and a movable part of the access to be guarded and an actuating device **(2)** adapted to be anchored to the other between the fixed or movable part of the access to be guarded and adapted to interact with said safety switch **(1)** upon the closing/opening of the access for the opening/closing of one or more power and/or service circuits of the machine or plant.

## Patentansprüche

1. Ein Sicherheitsschalter zum Schutz von Zugriffen auf Maschinen oder Industrieanlagen, der in der Nähe eines Zugangs montiert werden kann und beim Öffnen/Schließen des Zugangs mit einer Betätigungsvorrichtung (2) interagiert, umfasst:
- ein Gehäuse (4), das sich entlang einer Hauptabmessung erstreckt, die eine Längsachse (L) definiert;
- im Gehäuse (4) untergebrachte Kontrollmittel zum Empfangen und Austauschen von Signalen mit der Betätigungsvorrichtung (2) und/oder mit der Maschine oder Industrieanlage, die mit einer ersten Leiterplatte (31) ausgestattet ist;
- einen mit dem Gehäuse (4) verbundenen Kopf (9), der beim Öffnen/Schließen des Zugangs mit der Betätigungsvorrichtung (2) interagiert;
**dadurch gekennzeichnet, dass** die erste Leiterplatte (31) einen ersten Längsabschnitt im Gehäuse (4) und einen zweiten Längsabschnitt im Kopf (9) umfasst.

2. Sicherheitsschalter nach Anspruch 1, **dadurch gekennzeichnet, dass** der erste Längsabschnitt und der zweite Längsabschnitt der ersten Leiterplatte (31) integral und in physikalischer Kontinuität miteinander verbunden sind.

3. Sicherheitsschalter nach Anspruch 1 oder 2, **dadurch gekennzeichnet, dass** der Kopf (9) ein Kopplungselement (12) für seine Verbindung mit dem Gehäuse (4) aufweist, wobei das Kopplungselement (12) integraler Bestandteil der Oberseite (15) des Gehäuses (4) ist und so geformt ist, dass es den zweiten Abschnitt der ersten Leiterplatte (31) aufnimmt, wobei die Oberseite (15) des Gehäuses (4) mit mindestens einer Öffnung oder einem Schlitz (32) für den Durchgang der ersten Leiterplatte (31) in dem Kopf (9) versehen ist.

4. Sicherheitsschalter nach Anspruch 3 oder 4, **dadurch gekennzeichnet, dass** das Kupplungselement (12) L-förmig ist und einen Längsarm (14) aufweist, der von der Oberseite (15) des Gehäuses (4) an der Öffnung oder dem Schlitz (32) ausgeht, und einen Querarm (16), der vom Längsarm (14) auskragt.

5. Sicherheitsschalter nach Anspruch 4, **dadurch gekennzeichnet, dass** die erste Leiterplatte (31) im Gehäuse (4) parallel zur Längsachse (L) verläuft.

6. Sicherheitsschalter nach einem der vorhergehenden Ansprüche, **gekennzeichnet durch** mit der Steuereinrichtung verbundene Erfassungs- und Signalmittel, die das Vorhandensein der Betätigungsvorrichtung (2) erfassen und den Zugangs- und/oder Maschinen- oder Anlagenstatus signalisieren.

7. Sicherheitsschalter nach Anspruch 4 oder 5, in Kombination mit Anspruch 6, **dadurch gekennzeichnet, dass** die Erfassungs- und Signalmittel ein erstes Fernkommunikationselement (26) im Querarm (16) umfassen, dass das Vorhandensein einer elektronischen Betätigungsvorrichtung (2) durch Austausch eines Näherungssignals mit einem zweiten Kommunikationselement (27) erkennt, das der Betätigungsvorrichtung (2) zugeordnet ist.

8. Sicherheitsschalter nach Anspruch 7, **dadurch gekennzeichnet, dass** das erste Fernkommunikationselement (26) eine Antenne zur Erfassung von RFID-Signalen ist.

9. Sicherheitsschalter nach einem der Ansprüche 6 bis 8, **dadurch gekennzeichnet, dass** die im Querarm (16) untergebrachten Erfassungs- und Signalmittel eine oder mehrere Signalleuchten oder -anzeigen umfassen.

10. Sicherheitsschalter nach einem der Ansprüche 6 bis 9, **dadurch gekennzeichnet, dass** der Querarm (16) des Kopfes (9) eine zweite Leiterplatte (34) beherbergt, die zumindest einen Teil der Erfassungs- und Signalmittel trägt.

11. Sicherheitsschalter nach Anspruch 10, **dadurch gekennzeichnet, dass** die zweite Leiterplatte (34) mit einer oder mehreren elektrischen Anschlussbahnen (35) versehen ist, die mit entsprechenden elektrischen Anschlussbahnen (36) der ersten Leiterplatte (31) verbunden sind, um die Erfassungs- und Signalmittel mit der Steuereinrichtung zu verbinden.

12. Sicherheitsschalter nach Anspruch 10 oder 11, **dadurch gekennzeichnet, dass** die zweite Leiterplatte (34) am zweiten Längsabschnitt der ersten Leiterplatte (31) befestigt ist.

13. Sicherheitsschalter nach einem der Ansprüche 5 bis 13, **dadurch gekennzeichnet, dass** der Kopf (9) einen abnehmbaren Abschnitt (13) mit Kupplungsmitteln zur Kupplung mit dem Kupplungselement (12) aufweist.

14. Sicherheitsschalter nach einem der vorhergehenden Ansprüche, der zum Zusammenwirken mit einer Betätigungsvorrichtung (2) mit einem Betätigungsstift (11) geeignet ist, **dadurch gekennzeichnet, dass** das Gehäuse (4) einen Verriegelungs- /Entriegelungsmechanismus (5) zum Verriegeln/Entriegeln der Betätigungsvorrichtung (2) beherbergt und mit einem Verriegelungs- /Entriegelungsstift (6) ausgestattet ist, der entlang einer Längsrichtung (X) beweglich ist und zumindest teilweise mit einem Ende (7) aus dem Gehäuse (4) in das Innere des Kopfes (9) hineinragt, wobei letzterer einen oder mehrere Schlitze (10) aufweist, die das Einführen des Betätigungsstifts (11) darin ermöglichen.

15. Sicherheitsschalter nach den Ansprüchen 13 und 14, **dadurch gekennzeichnet, dass** sich der oder die Schlitze (10) am abnehmbaren Teil (13) des Kopfes (9) befinden.

16. Sicherheitsschalter nach Anspruch 14 oder 15, **dadurch gekennzeichnet, dass** der eine oder die mehreren Schlitze (10) jeweilige Einsteckrichtungen (Z) des Betätigungsstifts (11) im Inneren des Kopfes (9) definieren, wobei die erste Leiterplatte (31) von einer Ebene geschnitten wird, die senkrecht zur Längsachse (L) steht und die Einsteckrichtungen (Z) enthält.

17. Eine Sicherheitsanordnung zum Kontrollieren von Zugängen zu Maschinen oder Industrieanlagen, umfassend einen Sicherheitsschalter (1) gemäß einem oder mehreren der vorhergehenden Ansprüche, der dazu geeignet ist, an einem zwischen einem festen und einem beweglichen Teil des zu schützenden Zugangs verankert zu werden, und eine Betätigungsvorrichtung (2), die dazu geeignet ist, an dem anderen zwischen dem festen oder beweglichen Teil des zu schützenden Zugangs verankert zu werden und dazu geeignet ist, beim Schließen/Öffnen des Zugangs mit dem Sicherheitsschalter (1) zum Öffnen/Schließen eines oder mehrerer Strom- und/oder Wartungsstromkreise der Maschine oder Anlage zusammenzuwirken.

## Revendications

1. Commutateur de sécurité pour protéger des accés à des machines ou des installations industrielles, destiné à être monté à proximité d'un accès afin d'interagir avec un dispositif d'actionnement (2) lors de l'ouverture/fermeture de l'accès, lequel commutateur de sécurité comprend:
- un boîtier (4) s'étendant selon une dimension principale définissant un axe longitudinal de développement (L) ;
- des moyens de commande logés dans ledit boîtier (4) et adaptés à recevoir et échanger des signaux avec le dispositif d'actionnement (2) et/ou avec la machine ou l'installation, et équipés d'un premier circuit imprimé (31) ;
- une tête (9) connectée audit boîtier (4) et adaptée à interagir avec le dispositif d'actionnement (2) lors de l'ouverture/fermeture de l'accès ;
**caractérisé en ce que** ledit premier circuit imprimé (31) comprend une première partie longitudinale logée dans ledit boîtier (4) et une seconde partie longitudinale logée dans ladite tête (9).

2. Commutateur de sécurité selon la revendication 1, **caractérisé en ce que** ladite première partie longitudinale et ladite seconde partie longitudinale dudit premier circuit imprimé (31) sont solidaires et en continuité physique.

3. Commutateur de sécurité selon la revendication 1 ou 2, **caractérisé en ce que** ladite tête (9) comprend un élément de couplage (12) pour sa connexion avec ledit boîtier (4), ledit élément de couplage (12) étant solidaire de la face supérieure (15) dudit boîtier (4) et conformé pour loger ladite seconde partie dudit premier circuit imprimé (31), ladite face supérieure (15) dudit boîtier (4) étant pourvue d'au moins une ouverture ou fente (32) pour le passage dudit premier circuit imprimé (31) dans ladite tête (9).

4. Commutateur de sécurité selon la revendication 3 ou 4, **caractérisé en ce que** ledit élément de couplage (12) est en forme de L avec un bras longitudinal (14) s'étendant depuis la face supérieure (15) dudit boîtier (4) au niveau de ladite ouverture ou fente (32) et un bras transversal (16) en porte-à-faux depuis ledit bras longitudinal (14).

5. Commutateur de sécurité selon la revendication 4, **caractérisé en ce que** ledit premier circuit imprimé (31) s'étend dans ledit boîtier (4) parallèlement audit axe longitudinal de développement (L).

6. Commutateur de sécurité selon l'une quelconque des revendications précédentes, **caractérisé en ce qu'**il comprend des moyens de détection et de signalisation connectés auxdits moyens de commande et adaptés pour détecter la présence du dispositif d'actionnement (2) et pour signaler l'état de l'accès et/ou de la machine ou de l'installation.

7. Commutateur de sécurité selon les revendications 4 ou 5, combinées à la revendication 6, **caractérisé en ce que** lesdits moyens de détection et de signalisation comprennent un premier élément de communication à distance (26) logé dans ledit bras transversal (16) et adapté pour détecter la présence d'un dispositif d' actionnement (2) de type électronique par échange d'un signal de proximité avec un second élément de communication (27) associé au dispositif d'actionnement (2).

8. Commutateur de sécurité selon la revendication 7, **caractérisé en ce que** ledit premier élément de communication (26) est une antenne adaptée pour détecter les signaux RFID.

9. Commutateur de sécurité selon l'une quelconque des revendications 6 à 8, **caractérisé en ce que** les moyens de détection et de signalisation logés dans ledit bras transversal (16) comprennent un ou plusieurs voyants lumineux ou indicateurs.

10. Commutateur de sécurité selon l'une quelconque des revendications 6 à 9, **caractérisé en ce que** ledit bras transversal (16) de ladite tête (9) abrite un second circuit imprimé (34) supportant au moins une partie desdits moyens de détection et de signalisation.

11. Commutateur de sécurité selon la revendication 10, **caractérisé en ce que** ledit second circuit imprimé (34) est pourvu d'une ou plusieurs pistes de connexion électrique (35) connectées aux pistes de connexion électrique correspondantes (36) dudit premier circuit imprimé (31) pour la connexion entre lesdits moyens de détection et de signalisation et lesdits moyens de commande.

12. Commutateur de sécurité selon la revendication 10 ou 11, **caractérisé en ce que** ledit second circuit imprimé (34) est fixé à ladite seconde partie longitudinale dudit premier circuit imprimé (31).

13. Commutateur de sécurité selon l'une quelconque des revendications 5 à 13, **caractérisé en ce que** ladite tête (9) comprend une partie amovible (13) dotée de moyens de couplage avec ledit élément de couplage (12).

14. Commutateur de sécurité selon l'une quelconque des revendications précédentes, adapté à interagir avec un dispositif d'actionnement (2) muni d'une broche d'actionnement (11), **caractérisé en ce que** ledit boîtier (4) abrite un mécanisme de verrouillage/déverrouillage (5) pour verrouiller/déverrouiller le dispositif d'actionnement (2) et muni d'une broche de verrouillage/déverrouillage (6) mobile le long d'une direction longitudinale (X) pour faire saillie au moins partiellement par une extrémité (7) dudit boîtier (4) à l'intérieur de ladite tête (9), cette dernière comportant une ou plusieurs fentes (10) permettant l'insertion de la broche d'actionnement (11).

15. Commutateur de sécurité selon les revendications 13 et 14, **caractérisé en ce que** lesdites fentes (10) sont pratiquées sur ladite partie amovible (13) de ladite tête (9).

16. Commutateur de sécurité selon la revendication 14 ou 15, **caractérisé en ce que** lesdites une ou plusieurs fentes (10) définissent des directions d'insertion respectives (Z) de la broche d'actionnement (11) à l'intérieur de ladite tête (9), ledit premier PCB (31) étant coupé par un plan perpendiculaire audit axe longitudinal de développement (L) et contenant lesdites directions d'insertion (Z).

17. Ensemble de sécurité pour contrôler les accès à des machines ou installations industrielles, comprenant un commutateur de sécurité (1) selon une ou plusieurs des revendications précédentes adapté pour être ancré à l'une entre une partie fixe et une partie mobile de l'accès à protéger et un dispositif d'actionnement (2) adapté pour être ancré à l'autre entre la partie fixe ou mobile de l'accès à protéger et adapté pour interagir avec ledit interrupteur de sécurité (1) lors de la fermeture/ouverture de l'accès pour l'ouverture/fermeture d'un ou plusieurs circuits d'alimentation et/ou de service de la machine ou de l'installation.
